# EUROPÄISCHE PATENTSCHRIFT

(11) **EP 2 019 221 B1**
(45) Veröffentlichungstag und Bekanntmachung des Hinweises auf die Patenterteilung: **25.08.2010**
(21) Anmeldenummer: 08159607.4
(22) Anmeldetag: 03.07.2008
(51) Int. Cl.: F16D 3/76

(54) **Kupplungselement zur Übertragung eines Drehmoments**
Coupling element for torque transfer
Elément d'embrayage destiné à la transmission d'un couple

(30) Priorität: 25.07.2007 DE 102007034563
(43) Veröffentlichungstag der Anmeldung: 28.01.2009
(73) Patentinhaber: ZF Friedrichshafen AG, 88038 Friedrichshafen (DE)
(72) Erfinder: Hergath, Thilo, 88090, Immenstaad (DE); Müller, Josef, 88682, Salem (DE)

(56) Entgegenhaltungen:
- EP-A- 1 076 188
- EP-A- 1 524 443
- DE-A1- 4 338 039
- DE-A1- 19 533 329
- DE-C- 814 364
- DE-U1- 9 101 314
- GB-A- 479 377
- US-A- 3 207 539

## Beschreibung

Die Erfindung betrifft ein Kupplungselement zur Übertragung eines Drehmoments nach dem Oberbegriff des Patentanspruches 1 - bekannt durch die DE 32 22 119 C1 und die DE 910 1314 U1.

Bekannte Kupplungselemente wie z.B. DE 4338039 A1, welche zwischen einer Motorabtriebswelle und einer Getriebeeingangswelle angeordnet sind und ein Drehmoment übertragen, sind als in axialer Richtung flexible, jedoch in Umfangsrichtung torrsionssteife Scheiben ausgebildet. Derartige Kupplungselemente, auch Flexplates genannt, werden insbesondere bei Brennkraftmaschinen und Automatgetrieben von Kraftfahrzeugen zur Drehmomentübertragung eingesetzt. Das Kupplungselement hat die Aufgabe, das Abtriebsmoment des Motors auf die Eingangswelle des Automatgetriebes zu übertragen, wobei es axiale Verschiebungen zwischen Motorabtriebswelle und Getriebeantriebswelle möglichst ohne Übertragung von erheblichen Axialkräften zulassen soll. Daher ist das Kupplungselement in axialer Richtung nachgiebig ausgebildet.

Durch die DE 32 22 119 C1 wurde eine axial nachgiebige Mitnehmerscheibe bekannt, welche zur Drehmomentsübertragung zwischen Motor und Getriebe angeordnet ist, wobei die motorseitige Befestigung über einen radial innen angeordneten Flansch oder Befestigungsbereich und die getriebeseitige Befestigung über einen radial äußeren Ringflansch oder Befestigungsbereich erfolgt. Zwischen diesen beiden Befestigungsbereichen sind, über den Umfang verteilt, nierenförmige Aussparungen vorgesehen, zwischen denen sich radial verlaufende Stege erstrecken, welche eine axiale Nachgiebigkeit bewirken. Bei der Übertragung von größeren Drehmomenten ergibt sich das Problem, dass durch eine Verstärkung der Materialdicke des Kupplungselementes gleichzeitig die axiale Nachgiebigkeit nicht mehr in dem gewünschten Maße gewährleistet ist, da das Kupplungselement in axialer Richtung zu steif wird. Um die erforderliche Nachgiebigkeit in axialer Richtung zu erhalten, hat man daher mehrere dünne scheibenförmige Kupplungselemente, so genannte Membranen, zu einem Paket aufeinander geschichtet. Auch dieses System stößt bei höheren Belastungen an seine Grenzen.

Es ist Aufgabe der vorliegenden Erfindung, ein Kupplungselement der eingangs genannten Art derart zu verbessern, dass es ohne Funktionseinbusse auch höheren Belastungen, insbesondere durch höhere Drehmomente dauerhaft standhält.

Die Aufgabe der Erfindung wird durch die Merkmale des Patentanspruches 1 gelöst. Erfindungsgemäß ist vorgesehen, dass der mittlere Bereich, welcher sich zwischen dem inneren und äußeren Befestigungsbereich befindet, durch spiralförmig von innen nach außen verlaufende Stege gebildet wird, welche zwischen sich Aussparungen einschließen. Die Stege sind in entgegengesetzte Richtungen gekrümmt und bilden mit einem Radiusstrahl jeweils einen Schnittwinkel von 45 Grad. Infolge dessen ergeben sich zwischen den Stegen entgegengesetzter Krümmung Kreuzungspunkte mit einem Schnittwinkel von 90 Grad. Bei reiner Drehmomentbelastung ergeben sich Hauptspannungen (reiner Zug bzw. Druck) unter einem Winkel von +/-45 Grad. Bei kombinierter Beanspruchung, z. B. durch Drehmoment und Axialverschiebung, können die Hauptspannungsrichtungen geringfügig davon abweichen. Durch die spiralförmig gekrümmten Stege wird das Drehmoment des Motors, welches über den inneren Befestigungsbereich in das Kupplungselement eingeleitet wird, auf den äußeren Befestigungsbereich übertragen, wobei ein Teil der Stege Zugkräfte und der andere Teil der Stege Druckkräfte überträgt. Die Stege müssen daher eine der auftretenden Druckbeanspruchung angepasste Knickfestigkeit aufweisen. Damit werden eine hohe Torsionsfestigkeit und gleichzeitig eine axiale Nachgiebigkeit erreicht. Der Verlauf der Stege wird durch ihre Mittel- oder Systemlinien bestimmt, die durch eine logarithmische Funktion in Abhängigkeit vom Radius r und dem Umfangswinkel ϕ definiert sind (Polarkoordinaten).

Nach einer bevorzugten Ausführungsform ist das Kupplungselement aus einer Blechscheibe mit einer konstanten Blechstärke hergestellt, was den Vorteil mit sich bringt, dass derartige Kupplungselemente wie Membranen gestapelt werden können.

In einer anderen Ausführungsform des Kupplungselements ist eine mit zunehmendem Radius veränderliche Materialstärke vorgesehen, vorzugsweise eine zunächst von innen nach außen abnehmende und anschließend wieder ansteigende Materialstärke. Durch diese Maßnahme werden einerseits die erforderliche Drehmomentfestigkeit beibehalten und andererseits die notwendige axiale Flexibilität sichergestellt. Der Erfindung liegt die Erkenntnis zugrunde, die Geometrie des Kupplungselementes, insbesondere seine Materialstärke in Abhängigkeit vom Radius an den ebenfalls über dem Radius veränderlichen Spannungszustand, resultierend aus der Übertragung von Umfangs- und Axialkräften, anzupassen. Da die zu übertragenden Umfangskräfte mit größerem Radius abnehmen, kann die Materialstärke in diesem Bereich verringert werden, was einer Förderung der axialen Flexibilität zu Gute kommt. Im Bereich der Befestigungen innen und außen weist das Kupplungselement wegen einer Verschraubung bzw. Einspannung eine größere bzw. die maximale Materialstärke auf. Die Materialstärke kann in Abhängigkeit vom Radius an die Beanspruchungen optimal angepasst werden. Grundsätzlich können die Veränderungen der Materialstärke mit den Möglichkeiten der Gestaltung der Aussparungen frei kombiniert werden.

Nach einer bevorzugten Ausführungsform kann das Kupplungselement auf einer Seite eben sein, d. h. die Materialstärke nimmt asymmetrisch von innen nach außen ab und anschließend wieder zu. Damit wird der Vorteil erreicht, dass zumindest zwei Kupplungselemente mit ihren ebenen Seiten aufeinander gelegt werden können.

Vorzugsweise ist der mittlere Bereich des Kupplungselementes mit der variablen Materialstärke als geschlossene Fläche ausgebildet, wodurch der Vorteil einer homogenen Spannungsverteilung ohne große Spannungsspitzen erreicht wird.

Ausführungsbeispiele der Erfindung sind in der Zeichnung dargestellt und werden im Folgenden näher beschrieben. Es zeigen
Fig. 1 ein Kupplungselement mit spiralförmig verlaufenden Stegen als erstes Ausführungsbeispiel der Erfindung und
Fig. 2, 2a, 2b, 2c ein Kupplungselement mit variabler Materialstärke.

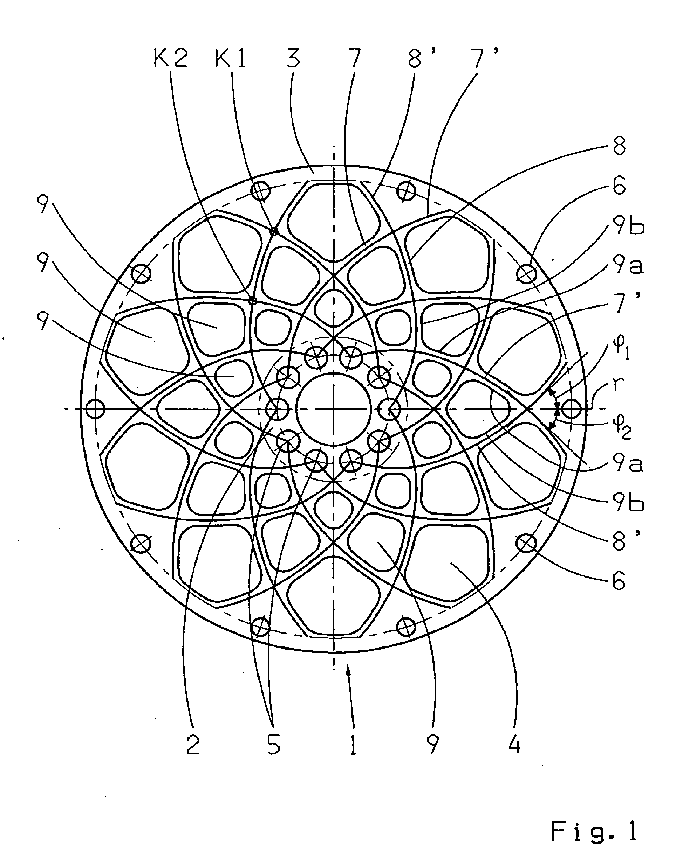

**Fig. 1** zeigt ein als kreisförmige Scheibe ausgebildetes Kupplungselement 1, welches einen inneren kreisringförmigen Befestigungsbereich 2, einen äußeren Befestigungsbereich 3 und einen zwischen den Bereichen 2 und 3 angeordneten mittleren Bereich 4 aufweist. Der innere Bereich 2 ist flanschartig ausgebildet und weist, auf dem Umfang verteilt, eine Reihe von Befestigungsbohrungen 5 auf, über welche das Kupplungselement 1 mit einer nicht dargestellten Abtriebswelle eines Antriebsmotors, insbesondere einer Brennkraftmaschine eines Kraftfahrzeuges verbunden wird. Der äußere Befestigungsbereich 3 wird an einem nicht dargestellten Wandlergehäuse (Eingangsglied eines Automatgetriebes) befestigt. Damit stellt das Kupplungselement eine Drehmomentverbindung zwischen Brennkraftmaschine und Automatgetriebe her. Der mittlere Bereich 4 wird durch eine Vielzahl von Materialstegen 7, 8 (im Folgenden Stege genannt) gebildet, deren exakter Verlauf durch ihre Mittellinien 7', 8' (auch Systemlinien genannt) definiert ist. Die Stege 7, 8 schließen zwischen sich Aussparungen 9 unterschiedlicher Größe und Form ein, welche durch Seitenlinien 9a, 9b begrenzt werden. Die Systemlinien 7', 8' der spiralförmigen Stege 7, 8 schneiden die Radien jeweils unter einem Winkel von 45 Grad. Beispielhaft ist dies für einen Radius r und zwei Schnittwinkel ϕ₁, ϕ₂ von jeweils 45 Grad dargestellt. Diese Bedingung gilt für jeden Radiusstrahl, welcher die Systemlinien 7', 8' schneidet. Infolge dessen schneiden sich die Systemlinien 7', 8' in Kreuzungspunkten, von denen mit K1, K2 zwei Kreuzungspunkte beispielhaft bezeichnet sind, unter einem Schnittwinkel von 90 Grad. Dies gilt für alle Schnittpunkte der Systemlinien 7', 8'. Durch diese Geometrie der Stege 7, 8 und der daraus resultierenden Aussparungen 9 ergibt sich eine perforierte Scheibe, welche in Umfangsrichtung torsionsfest und in axialer Richtung nachgiebig ist. Ein über den inneren Befestigungsbereich 2 in die Scheibe eingeleitetes Drehmoment wird über die Stege 7, 8 auf den äußeren Befestigungsbereich 3 übertragen, wobei eine Hälfte der Stege auf Zug und die andere Hälfte der Stege auf Druck beansprucht wird. Damit ergeben sich definierte Kraftübertragungspfade und Spannungen. Durch die nach außen größer werdenden Aussparungen 9 wird die Scheibe (das Kupplungselement 1) im äußeren Bereich axial nachgiebiger. Das als Blechscheibe ausgebildete Kupplungselement 1 weist eine konstante Blechstärke auf. Die Aussparungen 9 werden im äußeren Bereich größer, weil der Umfang linear mit dem Radius zunimmt und zwischen den äußeren Verschraubungen weniger Material notwendig ist, um das Drehmoment zu übertragen. Um die axiale Steifigkeit gering zu halten, werden die Steifigkeiten entlang der radialen Verbindungslinien von den äußeren zu den inneren Schrauben minimiert.

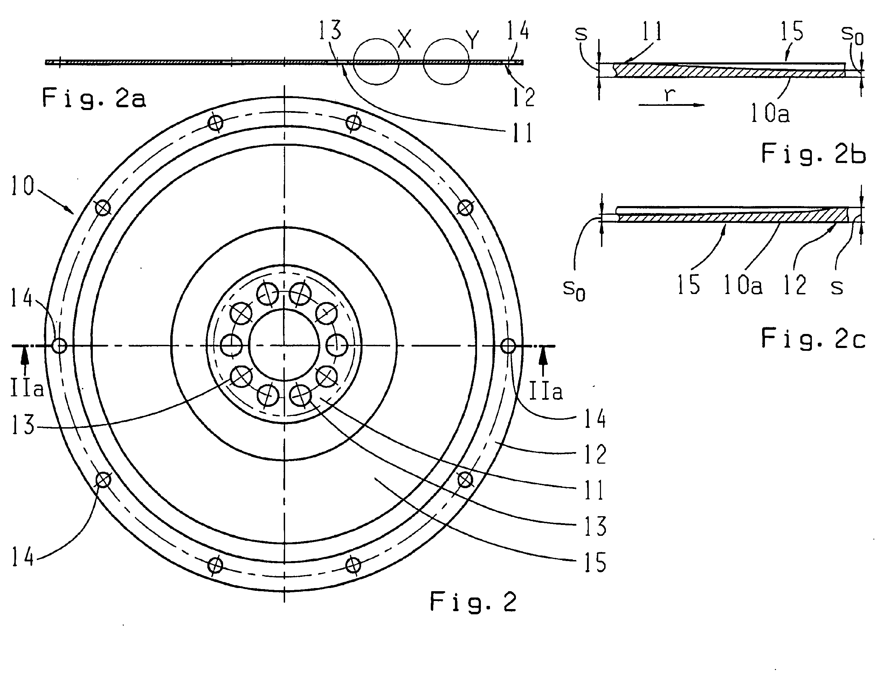

**Fig. 2** zeigt ein Kupplungselement 10, welches - einen inneren Befestigungsbereich 11 und einen äußeren Befestigungsbereich 12 mit Befestigungsbohrungen 13 bzw. 14 aufweist. Zwischen den beiden Befestigungsbereichen 11, 12 ist ein mittlerer Bereich 15 angeordnet, welcher beide Bereiche 11, 12 verbindet.

**Fig. 2a** zeigt einen Schnitt entlang der Linie IIa-IIa in Fig. 2, d. h. einen Querschnitt des Kupplungselements 10 im Durchmesserbereich. In Fig. 2a sind zwei Einzelheiten X, Y eingekreist, welche in den **Figuren 2b, 2c** vergrößert dargestellt sind. Fig. 2b zeigt, wie die Materialstärke s mit zunehmendem Radius r kontinuierlich auf eine minimale Materialstärke s₀ abnimmt, d. h. vom inneren Befestigungsbereich 11 nach außen. Fig. 2c zeigt dagegen, wie die Materialstärke von der minimalen Materialstärke s₀ wieder auf die Materialstärke s im äußeren Befestigungsbereich 12 anwächst. Durch diese kontrollierte Schwächung der Materialstärke im mittleren Bereich 15 wird das Kupplungselement 10 in axialer Richtung weicher, d. h. axiale Verschiebungen zwischen innerem und äußerem Befestigungsbereich 11, 12 werden mit nur geringen Elastizitätskräften übertragen. Der Bereich 15 wirkt somit wie eine sehr weiche Tellerfeder. Gleichzeitig ist die minimale Materialstärke s₀ in diesem Durchmesserbereich ausreichend, um die aus dem zu übertragenden Drehmoment resultierenden Umfangskräfte mit der erforderlichen Drehfestigkeit zu übertragen. Die Figuren 2b, 2c zeigen auch, dass die jeweils untere Seite 10a des Kupplungselementes 10 eben ausgebildet ist, d. h. die Abnahme der Materialstärke erfolgt asymmetrisch. Dadurch ist es möglich, zwei Kupplungselemente 10 mit ihren ebenen Seiten 10a aufeinander zu legen.

Auch das Kupplungselement 10 ist aus einem metallischen Werkstoff hergestellt. Die Größenordnung der Blechstärke für beide Kupplungselemente liegt vorzugsweise bei 2 mm; bevorzugte Durchmesser der Scheiben liegen bei etwa 400 mm.

### Bezugszeichen

- 1: Kupplungselement
- 2: Innerer Befestigungsbereich
- 3: Äußerer Befestigungsbereich
- 4: Mittlerer Bereich
- 5: Befestigungsbohrung, innen
- 6: Befestigungsbohrung, außen
- 7: Steg (rechts gekrümmt)
- 7': Systemlinie
- 8: Steg (links gekrümmt)
- 8': Systemlinie
- 9: Aussparung
- 9a: Seitenlinie
- 9b: Seitenlinie
- 10: Kupplungselement
- 11: Innerer Bereich
- 12: Äußerer Bereich
- 13: Befestigungsbohrung, innen
- 14: Befestigungsbohrung, außen
- 15: Mittlerer Bereich

- S: Materialstärke
- S₀: Minimalstärke
- K1: Kreuzungspunkt
- K2: Kreuzungspunkt
- ϕ₁: Schnittwinkel
- ϕ₂: Schnittwinkel

## Patentansprüche

1. Kupplungselement zur Übertragung eines Drehmoments von einem Antriebsmotor, auf ein Getriebe, wobei das Kupplungselement (1) einen radial inneren, motorseitigen und einen radial äußeren, getriebeseitigen Befestigungsbereich (2, 3) sowie einen mittleren, axial nachgiebigen, jedoch relativ torsionsfesten Bereich (4) aufweist, wobei der mittlere Bereich (4) durch spiralförmig vom inneren (2) zum äußeren (3) Bereich verlaufende, Aussparungen (9) in sich einschließende Stege (7, 8) gebildet wird, wobei die Stege (7, 8) spiralförmig verlaufende Systemlinien (7', 8') aufweisen, welche einen Radiusstrahl (r) jeweils unter einem Winkel ϕ1, ϕ2 von 45 Grad schneiden, **dadurch gekennzeichnet, dass** die Aussparungen (9) zwischen den Stegen (7, 8) Seitenlinien (9a, 9b) aufweisen, welche etwa parallel zu den Sys- temlinien (7', 8') verlaufen.

2. Kupplungselement nach Anspruch 1, **dadurch gekennzeichnet, dass** die Stege (7, 8) in entgegengesetzte Richtungen gekrümmt sind und Kreuzungspunkte (K1, K2) bildern.

3. Kupplungselement nach Anspruch 1, **dadurch gekennzeichnet, dass** die Systemlinien (7', 8') sich in den Kreuzungspunkten (K1, K2) rechtwinklig schneiden.

4. Kupplungselement nach einem der vorhergehenden Ansprüche, **dadurch gekennzeichnet, dass** das Kupplungselement (1) als Blechscheibe mit konstanter Blechstärke ausgebildet ist.

## Claims

1. Coupling element for transmitting a torque from a drive engine to a transmission, with the coupling element (1) having a radially inner, engine-side fastening region (2) and a radially outer, transmission-side fastening region (3) and having a central, axially flexible but relatively torsionally rigid region (4), with the central region (4) being formed by webs (7, 8) which run in spiral fashion from the inner region (2) to the outer region (3) and which between them enclose cutouts (9), with the webs (7, 8) having system lines (7', 8') which run in spiral fashion and which intersect a radius line (r) in each case at an angle ϕ1, ϕ2 of 45 degrees, **characterized in that** the cutouts (9) between the webs (7, 8) have side lines (9a, 9b) which run approximately parallel to the system lines (7', 8').

2. Coupling element according to Claim 1, **characterized in that** the webs (7, 8) are curved in opposite directions and form crossing points (K1, K2).

3. Coupling element according to Claim 1, **characterized in that** the system lines (7', 8') intersect at right angles at the crossing points (K1, K2).

4. Coupling element according to one of the preceding claims, **characterized in that** the coupling element (1) is formed as a sheet metal disc with a constant sheet metal thickness.

## Revendications

1. Elément d'embrayage destiné à la transmission d'un couple d'un moteur d'entraînement à une boîte de vitesses, l'élément d'embrayage (1) présentant une région de fixation radialement interne (2), du côté du moteur, et une région de fixation radialement externe (3), du côté de la boîte de vitesses, ainsi qu'une région centrale (4), flexible axialement mais relativement rigide en torsion, la région centrale (4) étant formée par des nervures (7, 8) s'étendant en forme de spirale de la région interne (2) jusqu'à la région externe (3), renfermant en elles des évidements (9), les nervures (7, 8) présentant des lignes de système (7', 8') s'étendant en spirale, qui coupent une droite de rayon (r) à chaque fois suivant un angle ϕi, ϕ2 de 45 degrés, **caractérisé en ce que** les évidements (9) entre les nervures (7, 8) présentent des lignes latérales (9a, 9b) qui s'étendent approximativement parallèlement aux lignes de système (7', 8').

2. Elément d'embrayage selon la revendication 1, **caractérisé en ce que** les nervures (7, 8) sont courbées dans des directions opposées et forment des points d'intersection (K1, K2).

3. Elément d'embrayage selon la revendication 1, **caractérisé en ce que** les lignes de système (7', 8') se coupent à angle droit dans les points d'intersection (K1, K2).

4. Elément d'embrayage selon l'une quelconque des revendications précédentes, **caractérisé en ce que** l'élément d'embrayage (1) est réalisé sous forme de disque en tôle avec une épaisseur de tôle constante.
